# EUROPEAN PATENT APPLICATION

(11) **EP 4 657 579 A2**
(43) Date of publication of application: **03.12.2025**
(21) Application number: 25173132.9
(22) Date of filing: 29.04.2025
(51) Int. Cl.: H01M 8/04537, H01M 8/04746, H01M 8/04955, H01M 16/00, H01M 8/04111, H01M 8/04119, H01M 8/04223, H01M 8/0432, H01M 8/04828, H01M 8/04858, H02J 15/00, H02J 1/00

(54) **FUEL CELL MODULE**

(30) Priority: 29.05.2024 JP 2024087202
(71) Applicant: KABUSHIKI KAISHA TOYOTA JIDOSHOKKI, Kariya-shi, Aichi-ken, 448-8671 (JP)
(72) Inventor: KAKIMI, Yosuke, Kariya-shi, Aichi, 448-8671 (JP)
(74) Representative: TBK

(57) **Abstract**

A fuel cell module (10) includes a fuel cell stack (11), a DC-DC converter (12) including a diode (D1, D3, D5) and a switching element (Q2, Q4, Q6) and configured to convert an output voltage of the fuel cell stack (11) and output the converted voltage to a power storage device (93), and a controller (62). The fuel cell module (10) controls power generation of the fuel cell stack (11) in response to a command from a high-level system (90). The fuel cell stack (11) is connected to a node between the diode (D1, D3, D5) and the switching element (Q2, Q4, Q6). The controller (62) turns off a switch that is provided between the DC-DC converter (12) and the power storage device (93) in a situation in which the output voltage of the fuel cell stack (11) is higher than a voltage of the power storage device (93).

## Description

### BACKGROUND ART

The present invention relates to a fuel cell module.

A fuel cell module disclosed in Japanese Patent Application Publication No. 2024-013960 includes a fuel cell stack and a DC-DC converter. The DC-DC converter includes six switching elements, diodes each connected in parallel to a corresponding one of the six switching elements, and reactors. The six switching elements divide into three sets of two switching elements connected in series to each other. A node between the two switching elements connected in series to each other is connected to the fuel cell stack through a corresponding one of the reactors. The DC-DC converter is connected to a power storage device. The DC-DC converter steps up an output voltage of the fuel cell stack by switching operation of the switching elements. Thus, power is supplied to the power storage device.

When a voltage of the power storage device is lower than the voltage of the fuel cell stack and the switching operation of the switching elements is not performed, a current flows from the fuel cell stack to the power storage device through the diodes. There is a case where it is desirable to prevent the current from flowing from the fuel cell stack to the power storage device through the diodes.

### SUMMARY

In accordance with an aspect of the present invention, there is provided a fuel cell module that includes a fuel cell stack, a DC-DC converter including a diode as a high-side diode and a switching element as a low-side switch, the DC-DC converter being configured to convert an output voltage of the fuel cell stack and output the converted voltage to a power storage device, and a controller. The fuel cell module is configured to control power generation of the fuel cell stack in response to a command from a high-level system. The fuel cell stack is connected to a node between the diode and the switching element. The controller turns off a switch that is provided between the DC-DC converter and the power storage device in a situation in which the output voltage of the fuel cell stack is higher than a voltage of the power storage device.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic configuration diagram of a fuel cell system;
FIG. 2 is a circuit diagram of a DC-DC converter;
FIG. 3 is a flowchart showing control by a controller according to a first embodiment;
FIG. 4 is a schematic configuration diagram illustrating the fuel cell system in a state where a module-side switch is turned off;
FIG. 5 is a flowchart showing control performed by the controller according to a second embodiment; and
FIG. 6 is a schematic configuration diagram illustrating the fuel cell system in a state where a system-side switch is turned off.

### DETAILED DESCRIPTION OF THE EMBODIMENTS

### [First embodiment]

The following will describe a first embodiment of a fuel cell module.

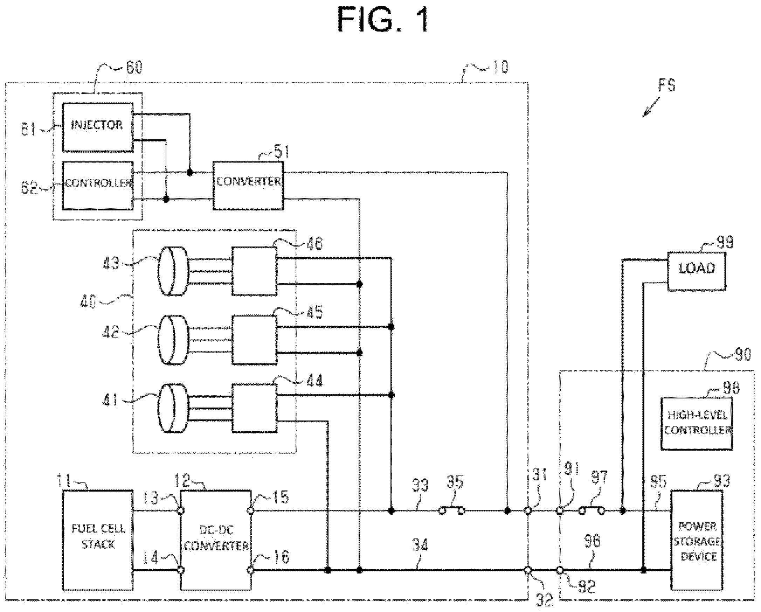

As illustrated in FIG. 1, a fuel cell system FS includes a high-level system 90 and a fuel cell module 10.

The high-level system 90 includes two system input terminals 91, 92. The fuel cell module 10 is connected to the system input terminals 91, 92. Power is supplied from the fuel cell module 10 to the high-level system 90 through the system input terminals 91, 92.

The high-level system 90 includes a power storage device 93. The system input terminals 91, 92 are connected to the power storage device 93. In detail, the high-level system 90 includes a positive connection line 95 through which the system input terminal 91 is connected to a positive electrode of the power storage device 93 and a negative connection line 96 through which the system input terminal 92 is connected to a negative electrode of the power storage device 93. The system input terminals 91, 92 are connected to the power storage device 93 through the positive connection line 95 and the negative connection line 96. A rated voltage of the power storage device 93 is defined as a first voltage. The first voltage is, for example, 48 [V]. The power storage device 93 is a secondary battery or a capacitor.

The high-level system 90 includes a system-side switch 97. The system-side switch 97 is an example of the switch in the present invention. The system-side switch 97 is, for example, a relay switch. The system-side switch 97 may be any switch such as a semiconductor switch. The system-side switch 97 is provided between the system input terminal 91 and the power storage device 93. The system-side switch 97 is provided on the positive connection line 95. When the system-side switch 97 is in an off-state, the power from the fuel cell module 10 is not supplied to the high-level system 90. When the system-side switch 97 is in an on-state, the power from the fuel cell module 10 is supplied to the high-level system 90.

The high-level system 90 includes a high-level controller 98. The high-level controller 98 switches the system-side switch 97 on and off. The high-level controller 98 sends commands to the fuel cell module 10. The commands include a power generation command for controlling power generation of the fuel cell module 10. The power generation command is a command to instruct the fuel cell module 10 on a target voltage or a target current.

A load 99 is connected to the high-level system 90. The load 99 is connected between the system-side switch 97 and the power storage device 93. The load 99 is driven by power supplied from at least one of the fuel cell module 10 and the power storage device 93. When the system-side switch 97 is in the on-state, the load 99 is driven by the power supplied from the fuel cell module 10. When the power supplied from the fuel cell module 10 is larger than consumption power of the load 99, the surplus power is stored in the power storage device 93. When the power supplied from the fuel cell module 10 is smaller than the consumption power of the load 99, the power is supplied also from the power storage device 93 to the load 99.

The load 99 is an electrical component that is driven by the first voltage. The load 99 may include an electrical component that is driven by a voltage different from the first voltage and a power converter that converts the first voltage and outputs the converted voltage to the electrical component.

### <Fuel cell module>

The fuel cell module 10 includes a fuel cell stack 11. The fuel cell stack 11 includes a plurality of fuel cells. The fuel cells are, for example, polymer electrolyte membrane fuel cells. The fuel cell stack 11 generates power by a chemical reaction between an anode gas and a cathode gas. The anode gas is, for example, hydrogen. The cathode gas is, for example, oxygen in the air.

The fuel cell module 10 includes a DC-DC converter 12. The DC-DC converter 12 has two input terminals 13, 14 and two output terminals 15, 16. The fuel cell stack 11 is connected to the two input terminals 13, 14. The power generated by the fuel cell module 10 is input to the DC-DC converter 12. The DC-DC converter 12 converts an output voltage of the fuel cell stack 11, which is input to the input terminals 13, 14, and outputs the converted voltage to the output terminals 15, 16. The DC-DC converter 12, for example, converts the output voltage of the fuel cell stack 11 to the first voltage and then outputs it.

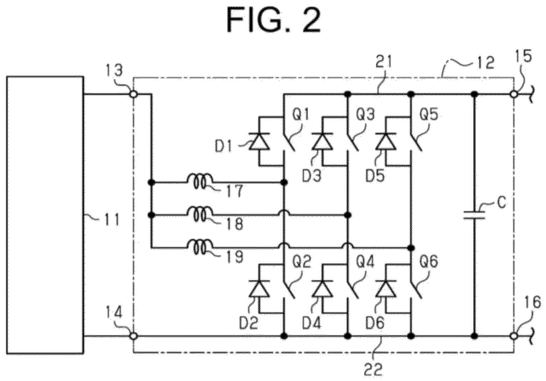

As illustrated in FIG. 2, the DC-DC converter 12 includes a positive connection line 21, a negative connection line 22, sixth switching elements Q1 to Q6, sixth diodes D1 to D6, three reactors 17 to 19, and a capacitor C. The positive connection line 21 is connected to the output terminal 15. The negative connection line 22 is connected to the output terminal 16.

The first switching element Q1 and the second switching element Q2 are connected in series to each other. The third switching element Q3 and the fourth switching element Q4 are connected in series to each other. The fifth switching element Q5 and the sixth switching element Q6 are connected in series to each other. The first switching element Q1, the third switching element Q3, and the fifth switching element Q5 are connected to the positive connection line 21. The second switching element Q2, the fourth switching element Q4, and the sixth switching element Q6 are connected to the negative connection line 22. The first switching element Q1, the third switching element Q3, and the fifth switching element Q5 are high-side switches. The second switching element Q2, the fourth switching element Q4, and the sixth switching element Q6 are low-side switches. The six switching elements Q1 to Q6 are, for example, metal oxide semiconductor field effect transistors (MOSFETs). The six switching elements Q1 to Q6 may be insulated gate bipolar transistors (IGBTs).

The diodes D1 to D6 are connected in parallel to the switching elements Q1 to Q6, respectively. The diodes D1 to D6 are body diodes of the switching elements Q1 to Q6, respectively. The diodes D1 to D6 may be components. Cathodes of the diodes D1, D3, and D5, which are respectively connected in parallel to the switching elements Q1, Q3, and Q5 as the high-side switches, are connected to the positive connection line 21. In the switching elements Q1, Q3, and Q5 as the high-side switches, an anode of the diode D1, which is connected in parallel to the switching element Q1, is connected to a node between the switching elements Q1 and Q2 connected in series to each other, an anode of the diode D3, which is connected in parallel to the switching element Q3, is connected to a node between the switching elements Q3 and Q4 connected in series to each other, and an anode of the diode D5, which is connected in parallel to the switching element Q5, is connected to a node between the switching elements Q5 and Q6 connected in series to each other. In the switching elements Q2, Q4, and Q6 as the low-side switches, a cathode of the diode D2, which is connected in parallel to the switching element Q2, is connected to a node between the switching elements Q1 and Q2 connected in series to each other, a cathode of the diode D4, which is connected in parallel to the switching element Q4, is connected to a node between the switching elements Q3 and Q4 connected in series to each other, and a cathode of the diode D6, which is connected in parallel to the switching element Q6, is connected to a node between the switching elements Q5 and Q6 connected in series to each other. Anodes of the diodes D2, D4, and D6, which are respectively connected in parallel to the switching elements Q2, Q4, and Q6 as the low-side switches, are connected to the negative connection line 22.

The DC-DC converter 12 includes the diodes D1, D3, and D5 as high-side diodes and switching elements Q2, Q4, and Q6 as low-side switches. The diodes D1, D3, and D5 as the high-side diodes are diodes that are connected to the positive connection line 21 with a higher electric potential, of the positive connection line 21 and the negative connection line 22. The switching elements Q2, Q4, and Q6 as the low-side switches are switching elements that are connected to the negative connection line 22 with a lower electric potential, of the positive connection line 21 and the negative connection line 22.

The nodes between the diodes D1, D3, and D5 as the high-side diodes and the switching elements Q2, Q4, and Q6 as the low-side switches are connected to the fuel cell stack 11. In detail, a positive electrode of the fuel cell stack 11 is connected to the node between the two switching elements Q1 and Q2 through the reactor 17. The node between the two switching elements Q1 and Q2 corresponds to the node between the diode D1 and the switching element Q2. The positive electrode of the fuel cell stack 11 is connected to the node between the two switching elements Q3 and Q4 through the reactor 18. The node between the two switching elements Q3 and Q4 corresponds to the node between the diode D3 and the switching element Q4. The positive electrode of the fuel cell stack 11 is connected to the node between the two switching elements Q5 and Q6 through the reactor 19. The node between the two switching elements Q5 and Q6 corresponds to the node between the diode D5 and the switching element Q6.

The capacitor C is provided between the positive connection line 21 and the negative connection line 22.

The above-described DC-DC converter 12 may step up the output voltage of the fuel cell stack 11 by the switching operation of the switching elements Q1 to Q6 and output the stepped-up voltage from the output terminals 15, 16. When the output voltage of the fuel cell stack 11 is larger than a voltage of the power storage device 93, a current flows through the diodes D1, D3, and D5, so that the output voltage of the fuel cell stack 11 is decreased and the decreased voltage is output from the output terminals 15, 16.

As illustrated in FIG. 1, the fuel cell module 10 includes two module output terminals 31, 32, a positive connection line 33, and a negative connection line 34. The module output terminals 31, 32 are connected to the system input terminals 91, 92, respectively. Output power of the fuel cell module 10 is output from the module output terminals 31, 32, and then, input to the high-level system 90. The output terminal 15 is connected to the module output terminal 31 through the positive connection line 33. The output terminal 16 is connected to the module output terminal 32 through the negative connection line 34. Thus, the output power of the DC-DC converter 12 is output at the module output terminals 31, 32. Note that the output power of the fuel cell module 10 is the power output from the DC-DC converter 12. The output power of the fuel cell module 10 is supplied to the power storage device 93. Therefore, the DC-DC converter 12 converts the output voltage of the fuel cell stack 11 and outputs the converted voltage to the power storage device 93.

The fuel cell module 10 includes a module-side switch 35. The module-side switch 35 is provided on the positive connection line 33. The module-side switch 35 is an example of the switch in the present invention. The module-side switch 35 is, for example, a relay switch. The module-side switch 35 may be any switch such as a semiconductor switch.

The module-side switch 35 is provided between the DC-DC converter 12 and the module output terminal 31. The module-side switch 35 and the system-side switch 97 are provided between the DC-DC converter 12 and the power storage device 93. Accordingly, a path from the fuel cell stack 11 to the power storage device 93 is electrically disconnected by turning off either the module-side switch 35 or the system-side switch 97.

The fuel cell module 10 includes a first voltage auxiliary device 40. The first voltage auxiliary device 40 is driven by the first voltage. The first voltage auxiliary device 40 is connected between the DC-DC converter 12 and the module-side switch 35. In detail, a node between the DC-DC converter 12 and the module-side switch 35 on the positive connection line 33 and any point on the negative connection line 34 are electrically connected to the first voltage auxiliary device 40.

The first voltage auxiliary device 40 is an electrical component that causes the fuel cell stack 11 to generate power. The first voltage auxiliary device 40 includes an air compressor 41, a hydrogen pump 42, a cooling pump 43, and inverters 44, 45, and 46 that are provided corresponding to these three. The inverters 44 to 46 each convert the DC power input through the positive connection line 33 and the negative connection line 34 to AC power and outputs the AC power.

The air compressor 41 is driven by the AC power output from the inverter 44. The air compressor 41 compresses and discharges the cathode gas. The cathode gas discharged from the air compressor 41 is supplied to the fuel cell stack 11. The air compressor 41 is connected between the DC-DC converter 12 and the module-side switch 35.

The hydrogen pump 42 is driven by the AC power output from the inverter 45. The hydrogen pump 42 supplies hydrogen to the fuel cell stack 11. In detail, the hydrogen pump 42 supplies the hydrogen to the fuel cell stack 11 by circulating the hydrogen through a circulation passage that is connected to the fuel cell stack 11.

The cooling pump 43 is driven by the AC power output from the inverter 46. The cooling pump 43 circulates a cooling medium through a cooling passage. The cooling medium cools the fuel cell stack 11. The cooling medium may cool the cathode gas discharged from the air compressor 41.

The fuel cell module 10 includes a converter 51. The converter 51 is connected between the module-side switch 35 and the module output terminal 31. In detail, a node between the module-side switch 35 and the module output terminal 31 on the positive connection line 33 and any point on the negative connection line 34 are electrically connected to the converter 51. It can also be said that the converter 51 is connected between the module-side switch 35 and the power storage device 93.

The converter 51 is a DC-DC converter. The converter 51 converts the first voltage input through the positive connection line 33 and the negative connection line 34 to a second voltage and outputs the second voltage. The second voltage is lower than the first voltage. The second voltage is, for example, 12 [V].

The fuel cell module 10 includes a second voltage auxiliary device 60. The second voltage auxiliary device 60 is driven by the second voltage. The second voltage auxiliary device 60 is connected to the converter 51. The second voltage auxiliary device 60 is an electrical component that causes the fuel cell stack 11 to generate power. The second voltage auxiliary device 60 includes an injector 61 and a controller 62. The injector 61 injects hydrogen to the fuel cell stack 11.

The controller 62 includes a processor and a storage unit. The processor is, for example, a central processing unit (CPU), a graphics processing unit (GPU), or a digital signal processor (DSP). The storage unit includes a random access memory (RAM) and a read only memory (ROM). The storage unit stores program codes or commands configured to cause the processor to execute processing. The storage unit, that is, a computer-readable medium, includes any available medium accessible by a general-purpose or dedicated computer. The controller 62 may be formed of a hardware circuit such as an application specific integrated circuit (ASIC) or a field programmable gate array (FPGA). The controller 62, which is a processing circuit, may include one or more processors that operate in accordance with the computer programs, one or more hardware circuits such as an ASIC or FPGA, or a combination thereof. The high-level controller 98 may have a hardware configuration similar to that of the controller 62.

The controller 62 switches the module-side switch 35 on and off. The controller 62 is communicable with the high-level controller 98. Accordingly, the controller 62 may receive commands from the high-level system 90. The controller 62 sends a notification to the high-level system 90 to provide a state of the fuel cell module 10, or the like. The controller 62 causes the high-level controller 98 to switch the system-side switch 97 on and off by sending a command to the high-level system 90.

The fuel cell module 10 controls the power generation of the fuel cell stack 11 in response to the command from the high-level system 90. For example, the controller 62 controls an amount of the anode gas that is supplied to the fuel cell stack 11 and an amount of the cathode gas that is supplied to the fuel cell stack 11 in response to the power generation command received from the high-level system 90. As a result, the controller 62 causes the fuel cell stack 11 to generate power so that the generated power of the fuel cell stack 11 follows the target voltage or the target current based on the power generation command received from the high-level system 90.

### <Control by the controller>

The controller 62 controls the module-side switch 35 and the system-side switch 97 so that they are switched on and off. The following will describe control by the controller 62.

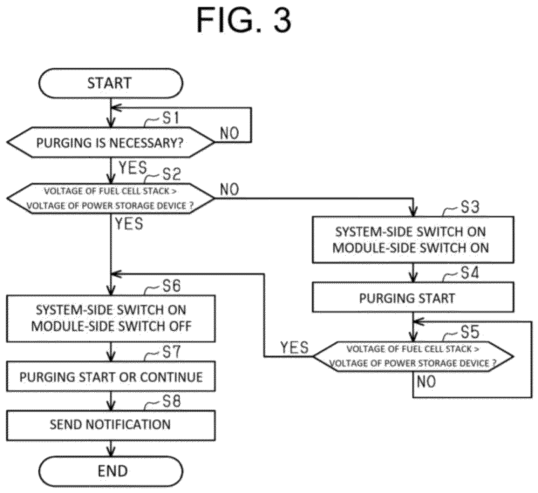

As illustrated in FIG. 3, at Step S1, the controller 62 determines whether purging is necessary or not. The purging is a process in which product water remaining in the fuel cell stack 11 is exhausted to an outside of the fuel cell stack 11 when the fuel cell module 10 is powered off. When the fuel cell module 10 is powered off, the fuel cell stack 11 becomes unable to generate power. When an environmental temperature falls below a freezing point in a state where the product water remains in the fuel cell stack 11, the product water freezes. Freezing the product water may cause blockage of a passage in the fuel cell stack 11, a failure to open or close a valve in the fuel cell stack 11, and a shortage of hydrogen or oxygen in the fuel cell stack 11. For this reason, when the product water may freeze, the purging is necessary.

For example, it may be determined whether the purging is necessary or not based on a weather forecast of tomorrow, an outside temperature detected by an outside temperature sensor, or whether a date on a calendar is in a winter season. The controller 62 may determine whether the purging is necessary or not, or the high-level controller 98 may determine that. In a case when the high-level controller 98 determines whether the purging is necessary, when the controller 62 receives a purging command from the high-level controller 98, a determination result at Step S1 may be set to "Yes".

A situation in which the fuel cell stack 11 is purged is an example of a situation in which the voltage of the fuel cell stack 11 is higher than the voltage of the power storage device 93. When the power generation of the fuel cell stack 11 is controlled in response to the commands from the high-level system 90, the controller 62 cannot adjust the voltage of the fuel cell stack 11. Thus, the voltage of the fuel cell stack 11 may become higher than the voltage of the power storage device 93 by accident. When the voltage of the fuel cell stack 11 is higher than the voltage of the power storage device 93, the current flows from the fuel cell stack 11 to the power storage device 93 through the diodes D1, D3, and D5. Although the fuel cell stack 11 is purged in order to exhaust the product water remaining in the fuel cell stack 11, new product water is generated by the current flowing from the fuel cell stack 11 to the power storage device 93. That is, the fuel cell stack 11 is purged in the situation in which the voltage of the fuel cell stack 11 becomes higher than the voltage of the power storage device 93, which generates product water, and the product water may interfere with the power generation of the fuel cell stack 11.

When the determination result at Step S1 is "YES", the controller 62 proceeds to Step S2. When the determination result at Step S1 is "NO", a process at Step S1 is repeated by the controller 62.

At Step S2, the controller 62 compares the voltage of the fuel cell stack 11 with the voltage of the power storage device 93. For example, the controller 62 determines whether the voltage of the fuel cell stack 11 is higher than the voltage of the power storage device 93. When a determination result at Step S2 is "YES", the controller 62 proceeds to Step S6. When the determination result at Step S2 is "NO", the controller 62 proceeds to Step S3.

At Step S3, the controller 62 turns on the system-side switch 97 and the module-side switch 35. While the fuel cell stack 11 does not generate power, the module-side switch 35 may be in an off-state. When the module-side switch 35 is in the off-state, the controller 62 needs to turn on the module-side switch 35.

As illustrated in FIG. 1, when the module-side switch 35 and the system-side switch 97 are turned on, power is supplied from the power storage device 93 to the first voltage auxiliary device 40. The controller 62 causes the cathode gas to be supplied to the fuel cell stack 11 by driving the air compressor 41. The controller 62 causes the anode gas to be supplied to the fuel cell stack 11 by driving the hydrogen pump 42.

Next, at Step S4, the controller 62 start to cause purging.

Next, at Step S5, the controller 62 compares the voltage of the fuel cell stack 11 with the voltage of the power storage device 93. For example, the controller 62 determines whether the voltage of the fuel cell stack 11 is higher than the voltage of the power storage device 93. The voltage of the fuel cell stack 11, that is, the output voltage of the fuel cell stack 11 may be measured, for example, by a voltage sensor that measures a voltage between the positive electrode and the negative electrode of the fuel cell stack 11. When a determination result at Step S5 is "YES", that is, when the voltage of the fuel cell stack 11 is higher than the voltage of the power storage device 93, the controller 62 proceeds to Step S6. When the determination result at Step S5 is "NO", that is, when the voltage of the fuel cell stack 11 is equal to or lower than the voltage of the power storage device 93, a process at Step S5 is repeated by the controller 62.

At Step S6, the controller 62 turns on the system-side switch 97 and turns off the module-side switch 35. Just before a process at Step S6 is executed, both the system-side switch 97 and the module-side switch 35 are still in the on-state. Accordingly, the controller 62 only needs to turn off the module-side switch 35. The module-side switch 35 is turned off, so that no current flows from the fuel cell stack 11 to the power storage device 93 even when the voltage of the fuel cell stack 11 is higher than the voltage of the power storage device 93. As a result, product water is hardly generated in the fuel cell stack 11. Thus, the controller 62 turns off the module-side switch 35 in the situation in which the voltage of the fuel cell stack 11 is higher than the voltage of the power storage device 93.

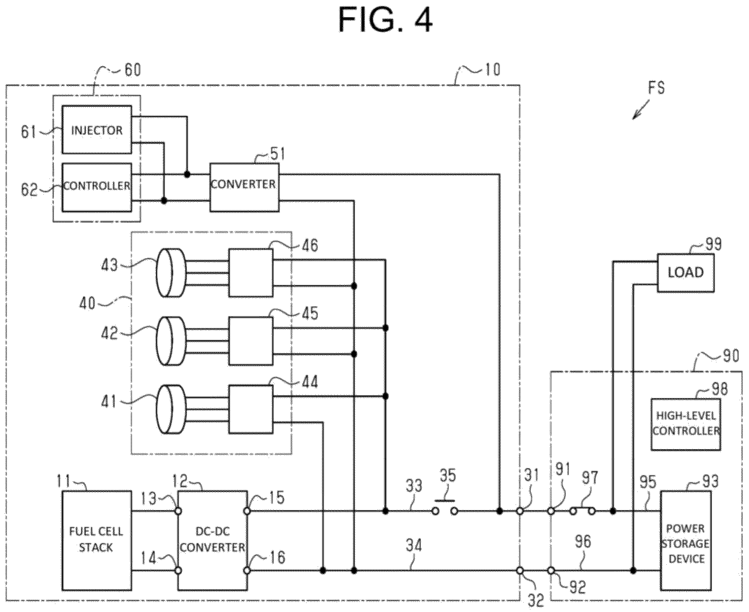

As illustrated in FIG. 4, power is supplied from the fuel cell stack 11 to the first voltage auxiliary device 40. As a result, the purging of the fuel cell stack 11 continues. After the module-side switch 35 is turned off as described above, the power generated by the fuel cell stack 11 is supplied to the air compressor 41, thereby purging the fuel cell stack 11.

A current flowing from the fuel cell stack 11 to the first voltage auxiliary device 40 is smaller than the current flowing from the fuel cell stack 11 into the power storage device 93. Thus, although new product water is generated by the current flowing into the first voltage auxiliary device 40 in order to purge the fuel cell stack 11, the generated product water is discharged by the purging.

Next, as illustrated in FIG. 3, at Step S7, the controller 62 starts to cause purging when the purging is not in progress. When the purging is already in progress, it continues.

Next, at Step S8, the controller 62 sends a notification to the high-level system 90 not to turn off the system-side switch 97. Power is supplied from the power storage device 93 to the second voltage auxiliary device 60. For this reason, during the purging of the fuel cell stack 11, the system-side switch 97 needs to be kept in the on-state. For example, the controller 62 may send a notification that the purging of the fuel cell stack 11 is in progress. When the purging of the fuel cell stack 11 is in progress, the high-level controller 98 needs to avoid turning off the system-side switch 97.

The module-side switch 35 and the system-side switch 97 are controlled as described above, so that the fuel cell stack 11 is purged while the current is prevented from flowing from the fuel cell stack 11 to the power storage device 93.

### [Advantageous effects of first embodiment]

The following will describe advantageous effects of the first embodiment.
(1-1) The controller 62 electrically disconnects the path from the fuel cell stack 11 to the power storage device 93 by turning off the module-side switch 35 in the situation in which the voltage of the fuel cell stack 11 is higher than the voltage of the power storage device 93. Thus, the current is prevented from flowing from the fuel cell stack 11 to the power storage device 93.
(1-2) The controller 62 turns off the module-side switch 35 in the situation in which the voltage of the fuel cell stack 11 is higher than the voltage of the power storage device 93. As a result, the process of electrically disconnecting the path from the fuel cell stack 11 to the power storage device 93 is executed faster as compared with a case where the controller 62 sends the command to the high-level controller 98 to turn off the system-side switch 97.
(1-3) The controller 62 causes the power generated in the fuel cell stack 11 to be supplied to the air compressor 41 after turning off the module-side switch 35 to cause the purging of the fuel cell stack 11. Thus, the fuel cell stack 11 is purged using the power generated in the fuel cell stack 11. Although product water is generated by the current flowing into the air compressor 41, the generated product water is less than that generated when the current flows into the power storage device 93. Accordingly, the product water is exhausted by the purging.
(1-4) The controller 62, when turning off the module-side switch 35, sends the notification to the high-level system 90 not to turn off the system-side switch 97. This prevents the power supply from the power storage device 93 to the second voltage auxiliary device 60 from being cut off.
(1-5) The first voltage auxiliary device 40 is connected between the DC-DC converter 12 and the module-side switch 35. A current is prevented from flowing from the power storage device 93 to the first voltage auxiliary device 40 by turning off the module-side switch 35. Thus, when the first voltage auxiliary device 40 is not driven, a standby current is prevented from flowing from the power storage device 93 to the first voltage auxiliary device 40 by turning off the module-side switch 35.
(1-6) The converter 51 that supplies power to the second voltage auxiliary device 60 is connected between the module-side switch 35 and the power storage device 93. Power is supplied from the power storage device 93 to the second voltage auxiliary device 60 by turning on the system-side switch 97. Thus, the fuel cell module 10 need not include a power storage device for supplying power to the second voltage auxiliary device 60.

### [Second embodiment]

The following will describe a second embodiment of the fuel cell module. The second embodiment is different from the first embodiment in control by the controller. The following will describe control by the controller according to the second embodiment.

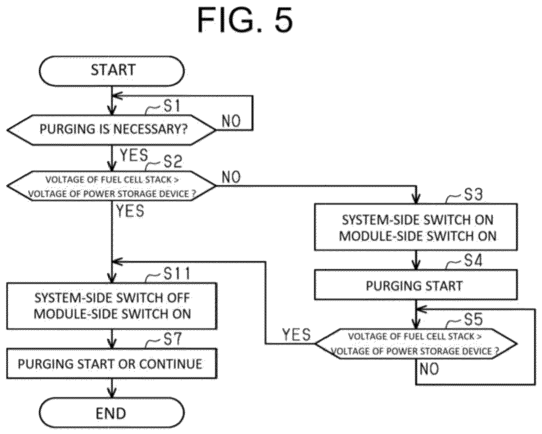

As illustrated in FIG. 5, in the second embodiment, when the determination result at Step S2 is "YES" or the determination result at Step S5 is "YES", the controller 62 proceeds to Step S11.

At Step S11, the controller 62 turns off the system-side switch 97 and turns on the module-side switch 35. Just before a process at Step S11 is executed, both the system-side switch 97 and the module-side switch 35 are still in the on-state. Accordingly, the controller 62 only needs to turn off the system-side switch 97. The controller 62 sends a command to the high-level system 90 to turn off the system-side switch 97. The system-side switch 97 is turned off, so that no current flows from the fuel cell stack 11 to the power storage device 93 even when the voltage of the fuel cell stack 11 is higher than the voltage of the power storage device 93. As a result, product water is hardly generated in the fuel cell stack 11.

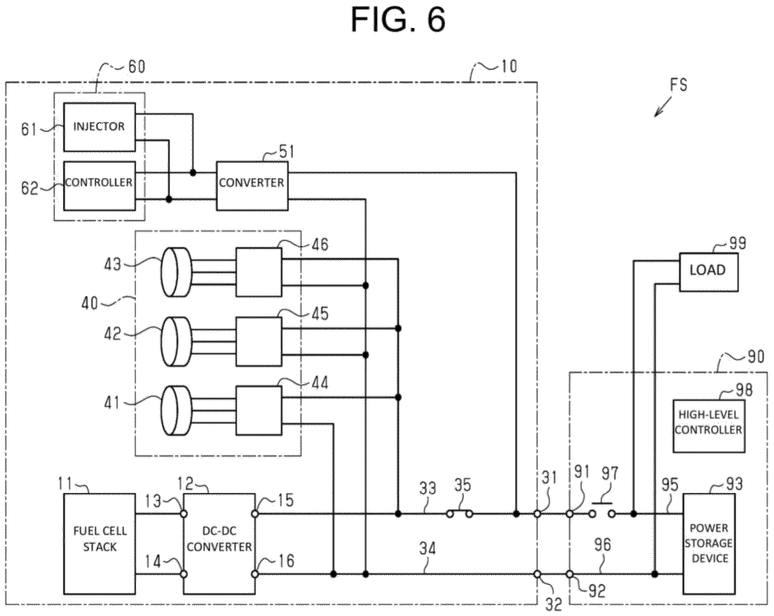

As illustrated in FIG. 6, when the system-side switch 97 is turned off in the situation in which the voltage of the fuel cell stack 11 is higher than the voltage of the power storage device 93, power is supplied from the fuel cell stack 11 to the second voltage auxiliary device 60. Accordingly, during the purging of the fuel cell stack 11, the first voltage auxiliary device 40 and the second voltage auxiliary device 60 are driven by the power generated in the fuel cell stack 11.

### [Advantageous effects of second embodiment]

The following will describe advantageous effects of the second embodiment. The second embodiment provides the following advantageous effect in addition to the effects (1-1), (1-3), (1-5), and (1-6) of the first embodiment.

(2-1) The controller 62 turns off the system-side switch 97, which prevents the current from flowing from the fuel cell stack 11 to the power storage device 93. When the system-side switch 97 is turned off in the situation in which the voltage of the fuel cell stack 11 is higher than the voltage of the power storage device 93, power is supplied from the fuel cell stack 11 to the second voltage auxiliary device 60. Thus, it is prevented that a charging rate of the power storage device 93 is decreased by the driving of the second voltage auxiliary device 60.

### [Modification]

The embodiments may be modified as follows. The embodiments and the following modification may be combined with each other as long as they do not contradict each other.

In each embodiment, the first voltage auxiliary device 40 may be connected between the module-side switch 35 and the power storage device 93.

In each embodiment, the second voltage auxiliary device 60 may be connected between the DC-DC converter 12 and the module-side switch 35. In this case, the fuel cell module 10 may include a power storage device for supplying power to the second voltage auxiliary device 60.

In the first embodiment, a process at Step S8 may be omitted.

## Claims

1. A fuel cell module (10) comprising:
a fuel cell stack (11);
a DC-DC converter (12) including a diode (D1, D3, D5) as a high-side diode and a switching element (Q2, Q4, Q6) as a low-side switch, the DC-DC converter (12) being configured to convert an output voltage of the fuel cell stack (11) and output the converted voltage to a power storage device (93); and
a controller (62),
the fuel cell module (10) configured to control power generation of the fuel cell stack (11) in response to a command from a high-level system (90), **characterized in that**
the fuel cell stack (11) is connected to a node between the diode (D1, D3, D5) and the switching element (Q2, Q4, Q6), and
the controller (62) turns off a switch that is provided between the DC-DC converter (12) and the power storage device (93) in a situation in which the output voltage of the fuel cell stack (11) is higher than a voltage of the power storage device (93).

2. The fuel cell module (10) according to claim 1, **characterized in that** the switch includes a module-side switch (35) provided in the fuel cell module (10), and
the controller (62) turns off the module-side switch (35) in the situation in which the output voltage of the fuel cell stack (11) is higher than the voltage of the power storage device (93).

3. The fuel cell module (10) according to claim 2, further comprising
an air compressor (41) connected between the DC-DC converter (12) and the module-side switch (35), **characterized in that**
the situation in which the output voltage of the fuel cell stack (11) is higher than the voltage of the power storage device (93) includes a situation in which the fuel cell stack (11) is purged, and
the controller (62) causes the purging of the fuel cell stack (11) by causing a power generated in the fuel cell stack (11) to be supplied to the air compressor (41) after turning off the module-side switch (35) in the situation in which the output voltage of the fuel cell stack is higher than the voltage of the power storage device (93).

4. The fuel cell module (10) according to claim 1, **characterized in that**
the switch includes a system-side switch (97) provided in the high-level system (90), and
the controller (62) turns off the system-side switch (97) by sending a command to the high-level system (90) to turn the system-side switch (97) off, in the situation in which the output voltage of the fuel cell stack (11) is higher than the voltage of the power storage device (93).

5. The fuel cell module (10) according to claim 2, **characterized in that**
the switch includes a system-side switch (97) provided in the high-level system (90), and
when the controller (62) turns the module-side switch (35) off in the situation in which the output voltage of the fuel cell stack (11) is higher than the voltage of the power storage device (93), the controller (62) sends a notification to the high-level system (90) not to turn off the system-side switch (97).
